# EUROPÄISCHE PATENTSCHRIFT

(11) **EP 1 216 915 B1**
(45) Veröffentlichungstag und Bekanntmachung des Hinweises auf die Patenterteilung: **01.03.2006**
(21) Anmeldenummer: 01129488.1
(22) Anmeldetag: 11.12.2001
(51) Int. Cl.: B62M 25/04

(54) **Leichtgängiger Umlenker für Mehrgangnaben**
Derailleur for multispeed hub transmission
Dérailleur pour moyeu à plusieurs vitesses

(30) Priorität: 23.12.2000 DE 10065175
(43) Veröffentlichungstag der Anmeldung: 26.06.2002
(73) Patentinhaber: SRAM Deutschland GmbH, 97404 Schweinfurt (DE)
(72) Erfinder: Blaschke, Georg, 97505 Geldersheim (DE); Böhm, Robert, 97453 Mainberg (DE); Hertel, Peter, 97421 Schweinfurt (DE)

(56) Entgegenhaltungen:
- EP-A- 0 577 129
- AT-B- 296 049
- DE-A- 3 314 229
- DE-A- 3 823 385

## Beschreibung

Die vorliegende Erfindung betrifft einen Umlenker für Mehrgangnaben für Fahrräder oder dgl. gemäß dem Oberbegriff des Patentanspruches 1.

Mit der DE 38 23 385 A ist eine derartige Umlenkeinrichtung für Mehrgangnaben bekannt geworden. Diese Umlenkeinrichtung ist am einen Ende der Nabenachse angelenkt und überträgt die über einen Schaltzug eingeleiteten Schaltvorgänge mit zwei Hebeln, die von drehbaren Kurvenscheiben verstellt werden, auf entsprechende Übertragungselemente in das Nabeninnere. Das Dokument AT 296 049 B offenbart einen Umlenker gemäß dem Oberbegriff von Anspruch 1, wobei zur Einleitung des Schaltvorganges ein Übertragungselement in Form einer Schaltstange von dem Schenkelende eines Segmenthebels axial verschoben wird.

Die gezeigten Ausführungen sind aufwändig zu montieren und zudem mit hoher Reibung behaftet, was wiederum zu hohen Schalt- und Rücksteilfederkräften führt.

Die Erfindung zeigt nun eine andere Ausgestaltung einer Umlenkeinrichtung, die eine vom Schalter über den Schaltzug eingeleitete Schaltbewegung mittels Kurvenscheibe und Schwenkhebel umlenkt und über ein oder mehrere längliche Übertragungselemente in das Nabeninnere überträgt. Hierbei wird u. a. die Aufgabe gelöst, die Umlenkeinrichtung montagefreundlich und reibungsminimiert auszubilden. Der Mehraufwand zur Verbesserung der Lagerung soll zum einen durch Integration der Lagerlaufbahnen in vorhandene Bauteile und zum anderen durch den Einsatz einer minimierten Rückstellfeder ganz oder teilweise aufgefangen werden.

Die erfindungsgemäße Lösung der Aufgabe ist im kennzeichnenden Teil des Hauptanspruches beschrieben. Weitere vorteilhafte Ausgestaltungen der Erfindung sind den jeweiligen Unteransprüchen zu entnehmen.

Erfindungsgemäß wird vorgeschlagen, den Umlenker mit einer zentralen Welle auszustatten, die eine Seilspule, ein Wälzlager, mindestens eine Kurvenscheibe und eine Lagerstelle für einen Lagerzapfen aufweist.

Kurvenscheibe und der Innenring des Wälzlagers sind fester Bestandteil der Welle, während die Seilspule formschlüssig gehalten und durch den Schaltzug bzw. durch das Schaltzugende auf der Welle axial ausgerichtet wird.

Die Welle ist in zwei Gehäuseteilen reibungsarm gelagert. Ein erstes Gehäuseteil bildet den Außenring für das Wälzlager und besteht aus einer Zylinderfläche und einer geraden Anlauffläche. Ein zweites Gehäuseteil verfügt zur reibungsarmen Aufnahme der radialen Lagerkräfte über einen Lagerzapfen mit relativ kleinem Durchmesser und zur Abstützung eventuell auftretender Axialkräfte über eine Kegelspitze. Diese Kegelspitze sorgt quasi mit einer Punktberührung für eine weitere Reduzierung der Reibung.

Die Wälzkörper z. B. Kunststoffkugeln werden in einem Kugelhalter positioniert. Der Kugelhalter ist so elastisch, dass eine Montage auf die rillenförmige Innenlaufbahn der Welle ohne Werkzeug erfolgen kann. Sitzt der Kugelhalter auf der Welle, so sind Kugelhalter und Kugeln unverlierbar angeordnet. Die äußere Laufbahn des Wälzlagers befindet sich im ersten Gehäuseteil und besteht aus einer zylindrischen Fläche, die mit einem Radius, der kleiner ist als der Kugelradius, in eine axiale Anlagefläche übergeht.

Durch die geschickte Anordnung der Wälzlagerung zwischen Seilspule und Kurvenscheibe werden die durch Schaltzug und Schwenkhebel in die Welle radial eingeleiteten Kräfte im wesentlichen vom Wälzlager aufgenommen und am Gehäuse abgestützt. An der zweiten Lagerstelle, dem Lagerzapfen, müssen nur geringe Kräfte zur Abstützung des an der Welle auftretenden Kippmomentes aufgenommen werden.

Die Anordnung der, nur durch den Schaltzug axial auf der Welle gehaltenen, Seilspule vor dem Wälzlager ermöglicht eine einfache Montage und Erneuerung des Schaltzuges und der Seilspule. Nach der Montage der Funktionsteile wird der Umlenker dicht verschlossen, wobei das erste und zweite Gehäuseteil vorzugsweise mit Ultraschall verschweißt werden. Das Einhängen des Schaltzuges in die Seilspule wird durch einen einfach zu öffnenden, spritzwasserdichten Deckel ermöglicht.

### Kurzbeschreibung der Zeichnung

Anhand von Zeichnungen wird ein Ausführungsbeispiel zur weiteren Erläuterung der Erfindungsmerkmale gezeigt:
- Fig. 1: zeigt einen Schnitt durch den Umlenker entlang des Schaltzugverlaufes
- Fig. 2: zeigt einen geöffneten Umlenker mit den wesentlichen Funktionsteilen
- Fig. 3: zeigt einen Schnitt durch das erste und zweite Gehäuseteil entlang der zentralen Welle

### Beschreibuiig eines bevorzugten Ausführungsbeispiels

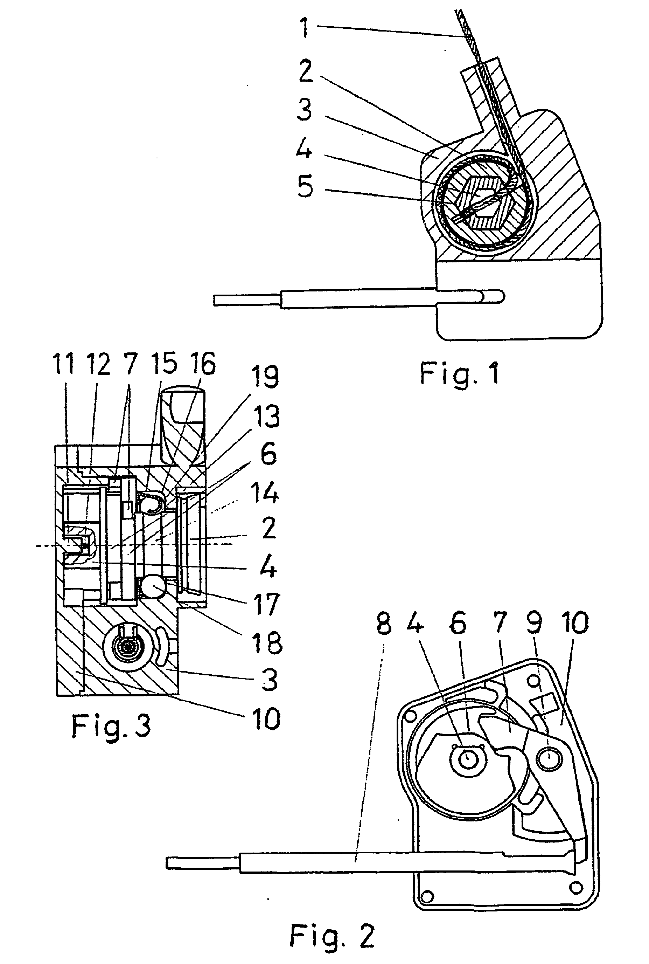

In Fig.1 ist die Anbindung des Schaltzuges 1 an die Seilspule 2 dargestellt. Der Schaltzug 1 wird durch das erste Gehäuseteil 3 geführt und ist um die Sellspule 2 geschlungen. Die Welle 4 trägt am Ende eine Polygonkontur 5, um die Seilspule 2 mit der entsprechenden Innenkontur formschlüssig aufzunehmen. Das Schaltzugende wird durch die Seilspule 2 hindurch geführt und in der Welle 4 eingehängt.

Der Schaltzug 1 übernimmt somit die axiale Ausrichtung der Seilspule 2 auf der Welle 4.

In Fig. 2 wird ein geöffneter Umlenker gezeigt. Die Welle 4 wird über die in Figur 2 gezeigte Seilspule gedreht und somit auch die fest auf der Welle 4 sitzende Kurvenscheibe 6. Der Schwenkhebel 7 wird durch das Übertragungselement 8 gegen die Kurvenscheibe 6 gedrückt. Beim Verdrehen der Welle 4 bewegt sich die Kurvenfläche der Kurvenscheibe 6 unter dem Schwenkhebel 7, wobei der Schwenkhebel 7 um die Drehachse 9 schwenkt und die Schaltbewegung an das Übertragungselement 8 weitergibt. Die Drehachse 9 ist ein fester Bestandteil des zweiten Gehäuseteils 10, in dem sich auch eine Lagerstelle für die Welle 4 befindet.

Fig. 3 zeigt einen Schnitt durch das erste und zweite Gehäuseteil 3 und 10 entlang der zentralen Welle 4. Die Welle 4 besitzt an einem Ende eine Bohrung mit relativ kleinem Durchmesser, die zusammen mit dem am zweiten Gehäuseteil 10 befindlichen Lagerzapfen 11 ein Gleitlager bildet. Die hier auftretenden axialen Lagerkräfte werden von einer kegeligen Spitze12 am Lagerzapfen 11 quasi mit einer Punktberührung reibungsarm abgestützt. Das zweite Lager ist ein Wälzlager 13, das zwischen der Seilspule 2 und den Kurvenscheiben 6 auf der Welle 4 angeordnet ist. Die Innenlaufbahn 14 des Wälzlagers 13 befindet sich auf der Welle 4. Die Außenlaufbahn 15 besteht aus einer zylindrischen Fläche im ersten Gehäuseteil 3 und geht mit einem Radius 16 in eine axiale Anlauffläche 17 über. Die Wälzkörper 18 werden von einem Kugelhalter 19 in Position gehalten. Der Kugelhalter 19 ist so elastisch ausgebildet, dass eine werkzeugfreie Montage über die Innenlaufbahn 14 ermöglicht wird. In dieser Darstellung ist auf der Welle 4 noch eine zweite Kurvenscheibe 6 zur Betätigung eines weiteren Schwenkhebels 7 angeordnet. Die Seilspule 2 wird nach der Montage der Welle 4 in den Gehäuseteilen 3 und 10 auf die Welle 4 aufgesteckt, der Schaltzug eingehängt und anschließend die Gehäuseöffnung mit einem hier nicht gezeigten, zu öffnenden Deckel spritzwasserdicht verschlossen.

### Bezugszeichenliste

- 1: Schaltzug
- 2: Seilspule
- 3: Erstes Gehäuseteil
- 4: Welle
- 5: Polygonkontur
- 6: Kurvenscheibe
- 7: Schwenkhebel
- 8: Übertragungselement
- 9: Drehachse
- 10: Zweites Gehäuseteil
- 11: Lagerzapfen
- 12: Kegelige Spitze
- 13: Wälzlager
- 14: Innenlaufbahn
- 15: Außenlaufbahn
- 16: Radius
- 17: Anlauffläche
- 18: Wälzkörper
- 19: Kugelhalter

## Patentansprüche

1. Umlenker für Schaltbewegungen, angeordnet an einem freien Ende der Nabenachse von Mehrgangnaben, bestehend aus einem Gehäuse, einer Welle (4) auf der eine Seilspule (2) und mindestens eine Kurvenscheibe (6) drehfest angeordnet sind, wobei die Kurvenscheibe (6) die Schaltbewegung über mindestens einen Schwenkhebel (7) an mindestens ein, auf das Nabengetriebe wirkende Übertragungselement (8) weiterleitet,
**dadurch gekennzeichnet,**
**dass** die Welle (4) mit einem Wälzlager (13) gelagert ist.

2. Umlenker nach Anspruch 1,
**dadurch gekennzeichnet,**
**dass** die Welle (4) zum einen mit dem Wälzlager (13) und zum anderen an einem Lagerzapfen (11) gelagert ist.

3. Umlenker nach Anspruch 1,
**dadurch gekennzeichnet,**
**dass** das Wälzlager (13) auf der Welle (4) zwischen Kurvenscheibe (6) und Seilspule (2) angeordnet ist.

4. Umlenker nach Anspruch 1,
**dadurch gekennzeichnet,**
**dass** das Wälzlager (13) als Kugellager ausgebildet ist und der Innenring mit der Innenlaufbahn (14) mit der Welle (4) ein Bauteil bildet oder aus dem gleichen Material, vorzugsweise aus Kunststoff besteht.

5. Umlenker nach Anspruch 1,
**dadurch gekennzeichnet,**
**dass** das Gehäuse aus mindestens zwei Gehäuseteilen (3) und (10) besteht und das Wälzlager (13) als Kugellager ausgebildet ist und der Außenring bzw. die Außenlaufbahn (15) für die Wälzkörper (18) mit einem Gehäuseteil ein Bauteil bildet oder aus dem gleichen Material, vorzugsweise aus Kunststoff besteht.

6. Umlenker nach Anspruch 5,
**dadurch gekennzeichnet,**
**dass** die Außenlaufbahn (15) für die Kugeln, eine zylindrische Form aufweist, die mit einem kleineren Radius (16) als der Kugelradius in eine axiale Antauffläche übergeht.

7. Umlenker nach Anspruch 4,
**dadurch gekennzeichnet,**
**dass** die Kugeln des Kugellagers zur Funktions- und Montageverbesserung von einem Kugelhalter (19), vorzugsweise aus elastischem Kunststoff, zusammengehalten werden.

8. Umlenker nach Anspruch 7,
**dadurch gekennzeichnet,**
**dass** der mit Kugeln bestückte, elastische Kugelhalter (19) werkzeugfrei und unverlierbar über den Rand des Innenringes bzw. der Innenlaufbahn (14) auf die Welle (4) montiert wird.

9. Umlenker nach Anspruch 2,
**dadurch gekennzeichnet,**
**dass** die axiale Abstützung der Welle (4) zum einen an der kegeligen Spitze (12) am Lagerzapfen (11) des zweiten Gehäuseteils (10) und zum anderen über die Wälzkörper (18) an einer Anlauffläche des ersten Gehäuseteils (3) erfolgt.

10. Umlenker nach Anspruch 2,
**dadurch gekennzeichnet,**
**dass** der Lagerzapfen (11) zur Reduzierung der radialen Lagerreibung einen kleinen Außendurchmesser und zur Reduzierung der axialen Lagerreibung eine Spitze, insbesondere eine kegelige Spitze (12) aufweist.

11. Umlenker nach Anspruch 10,
**dadurch gekennzeichnet,**
**dass** der Lagerzapfen (11) mit dem zweiten Gehäuseteil (10) ein gemeinsames Bauteil bildet oder aus dem gleichen Material, vorzugsweise aus Kunststoff besteht.

12. Umlenker nach den Ansprüchen 1 bis 11,
**dadurch gekennzeichnet,**
**dass** die Gehäuseteile (3) und (10) nach Montage der komplettierten Welle (4), dicht miteinander verbunden werden, insbesondere ultraschallverschweißt werden.

13. Umlenker nach Anspruch 1,
**dadurch gekennzeichnet,**
**dass** die Seilspule (2) mit ihrer Polygonkontur (5) auf das entsprechend geformte Endstück der Welle (4) aufgesteckt wird und die axiale Ausrichtung der Seilspule (2) durch den Schaltzug (1) erfolgt, dessen angeformtes oder mit einem Klemmnippel versehenes Ende in eine dafür vorgesehene Aussparung am entsprechenden Ende der Welle (4) eingehängt wird.

## Claims

1. Derailleur for gear shift movements, arranged at a free end of the hub axle of a multispeed hub, comprising a housing, a shaft (4) on which a cable reel (2) and at least one cam disc (6) are rotationally locked, the cam disc (6) transmitting the gear shift movement by way of at least one pivoted lever (7) to at least one transmission element (8) acting on the hub mechanism, **characterized in that** the shaft (4) is supported by a roller bearing (13).

2. Derailleur according to Claim 1, **characterized in that** the shaft (4) is partly supported on the roller bearing (13) and partly on a pivot pin (11).

3. Derailleur according to Claim 1, **characterized in that** the roller bearing (13) is arranged on the shaft (4) between the cam disc (6) and the cable reel (2).

4. Derailleur according to Claim 1, **characterized in that** the roller bearing (13) takes the form of a ball bearing and the inner ring with the inner raceway (14) forms one component with the shaft (4) or is composed of the same material, preferably of a plastic material.

5. Derailleur according to Claim 1, **characterized in that** the housing comprises at least two housing parts (3) and (10) and the roller bearing (13) takes the form of a ball bearing and the outer ring and the outer raceway (15) for the rolling element (18) forms one component with a housing part or is composed of the same material, preferably of a plastic material.

6. Derailleur according to Claim 5, **characterized in that** the outer raceway (15) for the balls has a cylindrical shape, which with a smaller radius (16) than the ball radius merges into an axial butting face.

7. Derailleur according to Claim 4, **characterized in that** the balls of the ball bearing are held together by a ball holder (19), preferably of a flexible plastic material, for improved functioning and assembly.

8. Derailleur according to Claim 7, **characterized in that** the flexible ball holder (19) fitted with balls is securely fitted onto the shaft (4) without the use of tools over the edge of the inner ring and the inner raceway (14).

9. Derailleur according to Claim 2, **characterized in that** the axial support for the shaft (4) is provided partly on the conical tip (12) on the pivot pin (11) of the second housing part (10) and partly by way of the rolling element (18) on a butting face of the first housing part (3).

10. Derailleur according to Claim 2, **characterized in that** the pivot pin (11) has a small outside diameter in order to reduce the radial bearing friction and a tip, in particular a conical tip (12) in order to reduce the axial bearing friction.

11. Derailleur according to Claim 10, **characterized in that** the pivot pin (11) forms a common component with the second housing part (10) or is composed of the same material, preferably a plastic material.

12. Derailleur according to Claims 1 to 11, **characterized in that** after assembly of the completed shaft (4) the housing parts (3) and (10) are tightly joined to one another, in particular by ultrasonic welding.

13. Derailleur according to Claim 1, **characterized in that** the cable reel (2) with its polygonal contour (5) is fitted onto the correspondingly shaped end piece of the shaft (4) and the axial alignment of the cable reel (2) is performed by the shift cable (1), the end of which is either formed on or is provided with a clamping nipple and is inserted into a recess provided for this purpose at the corresponding end of the shaft (4).

## Revendications

1. Dérailleur pour des mouvements de changement de vitesse, disposé sur une extrémité libre d'un axe de moyeu de moyeux à plusieurs vitesses, se composant d'un boîtier, d'un arbre (4) sur lequel sont calées une bobine de câble (2) et au moins une came (6), dans lequel la came (6) transmet le mouvement de changement de vitesse par l'intermédiaire d'au moins un levier pivotant (7) à au moins un élément de transmission (8) agissant sur le mécanisme du moyeu, **caractérisé en ce que** l'arbre (4) est supporté avec un palier à roulement (13).

2. Dérailleur selon la revendication 1, **caractérisé en ce que** l'arbre (4) est supporté d'une part avec le palier à roulement (13) et d'autre part sur un tourillon (11).

3. Dérailleur selon la revendication 1, **caractérisé en ce que** le palier à roulement (13) est disposé sur l'arbre (4) entre la came (6) et la bobine de câble (2).

4. Dérailleur selon la revendication 1, **caractérisé en ce que** le palier à roulement (13) est constitué par un roulement à billes et la bague intérieure avec la piste intérieure (14) forme un composant avec l'arbre (4) ou est composée de la même matière, de préférence de matière plastique.

5. Dérailleur selon la revendication 1, **caractérisé en ce que** le boîtier se compose d'au moins deux parties de boîtier (3) et (10) et le palier à roulement (13) est constitué par un roulement à billes, et la bague extérieure respectivement la piste extérieure (15) pour les corps de roulement (18) forme un composant avec une partie de boîtier ou est composée de la même matière, de préférence de matière plastique.

6. Dérailleur selon la revendication 5, **caractérisé en ce que** la piste extérieure (15) pour les billes présente une forme cylindrique, qui se transforme en une surface d'arrêt axiale avec un rayon (16) plus petit que le rayon des billes.

7. Dérailleur selon la revendication 4, **caractérisé en ce que** les billes du roulement à billes sont rassemblées par un support de billes (19), de préférence en matière plastique, pour améliorer le fonctionnement et le montage.

8. Dérailleur selon la revendication 7, **caractérisé en ce que** le support de billes élastique (19) garni de billes est monté sur l'arbre (4), sans outil et de manière imperdable, au-dessus du bord de la bague intérieure respectivement de la piste intérieure (14).

9. Dérailleur selon la revendication 2, **caractérisé en ce que** le support axial de l'arbre (4) est assuré d'une part par la pointe conique (12) sur le tourillon (11) de la deuxième partie de boîtier (10) et d'autre part par les corps de roulement (18) sur une surface d'arrêt de la première partie de boîtier (3).

10. Dérailleur selon la revendication 2, **caractérisé en ce que** le tourillon (11) présente un diamètre extérieur plus petit pour diminuer le frottement radial du palier et une pointe, en particulier une pointe conique (12), pour diminuer le frottement axial du palier.

11. Dérailleur selon la revendication 10, **caractérisé en ce que** le tourillon (11) forme un composant commun avec la deuxième partie de boîtier (10) ou se compose de la même matière, de préférence de matière plastique.

12. Dérailleur selon l'une quelconque des revendications 1 à 11, **caractérisé en ce que** les parties de boîtier (3) et (10) sont assemblées de façon étanche l'une à l'autre, de préférence par soudage aux ultrasons, après le montage de l'arbre (4) complet.

13. Dérailleur selon la revendication 1, **caractérisé en ce que** la bobine de câble (2) est engagée avec son contour polygonal (5) sur le bout de l'arbre (4) profilé de façon correspondante, et l'alignement axial de la bobine de câble (2) est assuré par le câble de changement de vitesse (1), dont l'extrémité façonnée ou pourvue d'un nipple de serrage est accrochée dans un évidement prévu à cet effet sur l'extrémité correspondante de l'arbre (4).
